# EUROPÄISCHE PATENTANMELDUNG

(11) **EP 1 130 943 A1**
(43) Veröffentlichungstag der Anmeldung: **05.09.2001**
(21) Anmeldenummer: 00104698.6
(22) Anmeldetag: 03.03.2000
(51) Int. Cl.: H04R 1/02, B60R 11/02

(54) **Lautsprecheranlage für Kraftfahrzeuge**

(71) Anmelder: BERKENBUSCH, Stefan, D-65197 Wiesbaden (DE); Hoh, Armin, 90530 Wendelstein (DE)
(72) Erfinder: BERKENBUSCH, Stefan, D-65197 Wiesbaden (DE); Hoh, Armin, 90530 Wendelstein (DE)
(74) Vertreter: TER MEER STEINMEISTER & PARTNER GbR

(57) **Zusammenfassung**

Lautsprecheranlage für Kraftfahrzeuge, bei der ein Lautsprecher (30) in der Reserveradmulde (14) des Kraftfahrzeugs untergebracht ist, **dadurch gekennzeichnet,** daß der Lautsprecher (30) zur lösbaren Befestigung in der Felge (20) des Reserverades (16) ausgebildet ist.

## Beschreibung

Die Erfindung betrifft eine Lautsprecheranlage für Kraftfahrzeuge, bei der ein Lautsprecher in der Reserveradmulde des Kraftfahrzeugs untergebracht ist.

Hochwertige Lautsprecheranlagen für Kraftfahrzeuge weisen mindestens einen Tieftonlautsprecher (Subwoofer) auf, dessen Gehäuse relativ große Abmessungen aufweisen muß, damit in Anbetracht der niedrigen Schallfrequenzen ein ausreichendes Resonanzvolumen geschaffen wird. Die Unterbringung dieses Tieftonlautsprechers im Kraftfahrzeug stellt einen bisher nicht befriedigend gelöstes Problem dar. Eine bekannte Lösung besteht darin, den Lautsprecher anstelle des Reserverades in der Reserveradmulde im Kofferraum des Fahrzeuges unterzubringen. In diesem Fall muß der Benutzer allerdings in Kauf nehmen, daß er bei einer zwar relativ unwahrscheinlichen aber doch immerhin möglichen Reifenpanne ohne Reserverad da steht.

Aufgabe der Erfindung ist es, eine Lautsprecheranlage zu schaffen, die eine platzsparende Unterbringung eines Tieftonlautsprechers ermöglicht, ohne daß hier für das Reserverad ausgebaut werden muß.

Diese Aufgabe wird bei einer Lautsprecheranlage der eingangs genannten Art dadurch gelöst, daß der Lautsprecher zur lösbaren Befestigung in der Felge des Reserverades ausgebildet ist.

Bei der Erfindung wird somit der Umstand ausgenutzt, daß die Felge des Reserverades typischerweise eine relativ geräumige schalenförmige Höhlung bildet, die von dem Reifen des Reserverades umgeben wird und deren Boden das Lochmuster für die Montage des Reserverades am Radträger des Fahrzeugs aufweist. Dadurch, daß diese Höhlung für die Aufnahme des Lautsprechergehäuses genutzt wird, ist es möglich, das Reserverad und einen immer noch verhältnismäßig großen Lautsprecher gemeinsam in der Reserveradmulde des Fahrzeugs unterzubringen. Zwar kann das Lautsprechergehäuse in diesem Fall nicht ganz so groß sein wie bei einem Lautsprecher, der die gesamte Reserveradmulde ausfüllt, doch wird immer noch eine durchaus ansprechende Klangqualität erreicht.

Vorteilhafte Ausgestaltungen der Erfindung ergeben sich aus den Unteransprüchen.

In einer besonders zweckmäßigen Ausführungsform ist das Lautsprechergehäuse aperiodisch bedämpft. Es ist bekannt, daß durch eine aperiodische Bedämpfung des Lautsprechergehäuses, bei der mit Hilfe von Ventileinrichtungen oder Filtern eine kontrollierte Be- und Entlüftung des Gehäuses im Rhythmus der akustischen Schwingungen ermöglicht wird, eine virtuelle Vergrößerung des Resonanzvolumens erreichbar ist, so daß trotz verhältnismäßig kleiner Gehäuseabmessungen auch bei einem Tieftonlautsprecher eine hohe Klangqualität und Dynamik erreicht wird. Durch diese Maßnahme wird somit die geringfügige Einschränkung bei den Abmessungen des Lautsprechergehäuses kompensiert.

Um den in der Felge verfügbaren Raum optimal auszunutzen, ist es weiterhin zweckmäßig, das Lautsprechergehäuse an die jeweilige Innenkontur der Felge anzupassen. In einer besonders vorteilhaften Ausführungsform wird das Lautsprechergehäuse zugleich als Befestigungsschelle für die Fixierung des Reserverades in der Reserveradmulde genutzt. Dies hat den Vorteil, daß für eine sichere und stabile Befestigung des Lautsprechergehäuses dieselben fahrzeugseitigen Befestigungseinrichtungen genutzt werden können, die normalerweise zur Befestigung der Halterung für das Reserverad dienen. Da in diesem Fall die sonst übliche Halterung für das Reserverad entfallen kann, wird zugleich eine weitere Vergrößerung des nutzbaren Volumens erreicht.

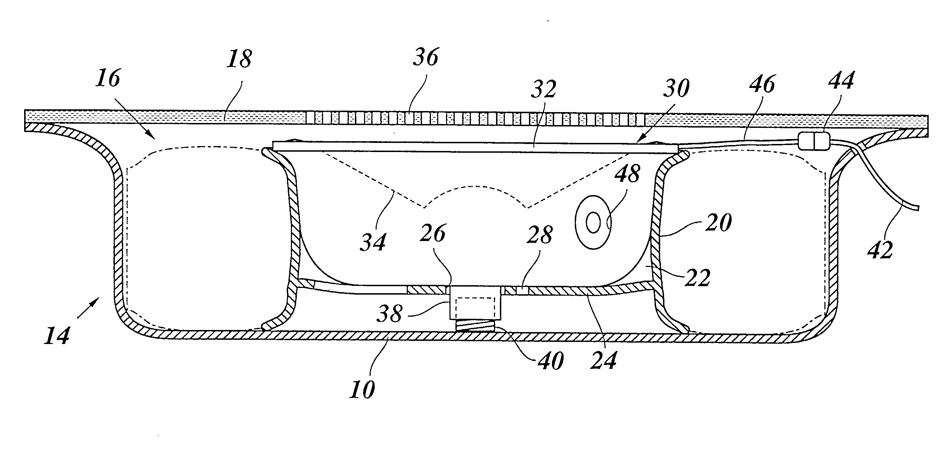

Im folgenden wird ein Ausführungsbeispiel anhand der Zeichnung näher erläutert.

Die einzige Zeichnungsfigur zeigt einen schematischen Schnitt durch eine Reserveradmulde im Boden des Kofferraums eines Kraftfahrzeugs, mit montiertem Reserverad und Lautsprecher.

Vom Kofferraum eines Kraftfahrzeugs ist in der Zeichnung nur ein Teil eines Bodenblechs 10 gezeigt, das eine flache, trogartige Reserveradmulde 14 für die liegende Unterbringung des Reserverades 16 bildet. Die Reserveradmulde 14 ist an der Oberseite durch eine lösbare, beispielsweise hochklappbare Abdeckung 18 abgeschlossen, die Teil der Innenauskleidung des Kofferraums ist.

Die Felge 20 des Reserverades 16 umschließt eine nach oben offene schalenförmige Höhlung 22, deren Boden durch die Speichen oder die Radscheibe 24 des Reserverades gebildet wird. In der Radscheibe sind üblicherweise eine Mittelöffnung 26 und vier oder fünf um die Mittelöffnung herum angeordnete Löcher 28 ausgebildet, die bei Gebrauch des Reserverades zu dessen Befestigung am Radträger des Fahrzeugs dienen.

Die von der Felge 20 umschlossene Höhlung 22 wird nahezu vollständig von einem Lautsprecher 30 ausgefüllt, dessen topfförmiges Gehäuse 32 mit seiner äußeren Umfangsfläche an die Innenkontur der Felge 20 angepaßt ist. Die Membran 34 des Lautsprechers liegt offen in der oberen Öffnung des Gehäuses 32, so daß die Schallenergie durch die unmittelbar darüber befindliche Abdeckung 18 abgestrahlt werden kann, die zu diesem Zweck mit einer Perforation 36 versehen ist.

Am Boden des Gehäuses 32 des Lautsprechers ist mittig ein Innengewindestutzen 38 angebracht, der sich auf einen vom Bodenblech 10 aufragenden Gewindezapfen 40 aufschrauben läßt, indem das gesamte Gehäuse 32 innerhalb der Höhlung 22 um seine Mittelachse gedreht wird. Auf diese Weise dient das Gehäuse 32 des Lautsprechers zugleich als Befestigungsschelle, mit der die Felge 22 sicher in der Reserveradmulde 14 befestigt wird. Der Gewindezapfen 40 ist ohnehin im Fahrzeug vorhanden und dient normalerweise zur Aufnahme einer herkömmlichen Befestigungsschelle für das Reserverad.

Der elektrische Anschluß des Lautsprechers 30 erfolgt über ein Lautsprecherkabel 42, das durch eine im Bodenblech 10 ausgebildete Öffnung in die Reserveradmulde 14 eintritt und innerhalb der Reserveradmulde über einen Steckverbinder 44 lösbar mit einem Anschlußkabel 46 verbunden ist, das außerhalb der Membran 34 am oberen Rand in das Gehäuse 32 des Lautsprechers eintritt.

Falls das Reserverad 16 benötigt werden sollte, braucht nach Entfernen der Abdeckung 18 und Lösen des Steckverbinders 44 lediglich der Lautsprecher 30 von dem Gewindezapfen 40 abgeschraubt zu werden, so daß sich das Reserverad 16 entnehmen läßt.

Der Lautsprecher 30 ist im gezeigten Beispiel als aperiodisch bedämpfter Lautsprecher ausgebildet. Deshalb weist das Gehäuse 32 in seiner Umfangswand eine Öffnung 48 auf, die einen nicht näher gezeigten Filter für die aperiodische Bedämpfung des Gehäuses 32 aufnimmt.

## Patentansprüche

1. Lautsprecheranlage für Kraftfahrzeuge, bei der ein Lautsprecher (30) in der Reserveradmulde (14) des Kraftfahrzeugs untergebracht ist, **dadurch gekennzeichnet,** daß der Lautsprecher (30) zur lösbaren Befestigung in der Felge (20) des Reserverades (16) ausgebildet ist.

2. Lautsprecheranlage nach Anspruch 1, **dadurch gekennzeichnet,** daß der Lautsprecher (30) ein aperiodisch bedämpftes Gehäuse (32) aufweist.

3. Lautsprecheranlage nach Anspruch 1 oder 2, **dadurch gekennzeichnet,** daß das Gehäuse (32) des Lautsprechers (30) an die Innenkontur einer von der Felge (20) umschlossenen Höhlung (22) angepaßt ist.

4. Lautsprecheranlage nach einem der vorstehenden Ansprüche, **dadurch gekennzeichnet,** daß das Gehäuse (32) des Lautsprechers zugleich eine Befestigungsschelle für die Befestigung des Reserverades (16) in der Reserveradmulde (14) bildet.

5. Lautsprecheranlage nach Anspruch 4, **dadurch gekennzeichnet,** daß das Gehäuse (32) des Lautsprechers einen Gewindestutzen (38) aufweist, der eine zentrale Öffnung (26) des Reserverades durchgreift und mit einem auf dem Boden der Reserveradmulde (14) angebrachten Gewindezapfen (40) verschraubbar ist.

6. Lautsprecheranlage nach einem der vorstehenden Ansprüche, **dadurch gekennzeichnet,** daß der Lautsprecher (30) über einen lösbaren, in der Reserveradmulde (14) zugänglichen Steckverbinder (44) lösbar mit einem Lautsprecherkabel (42) verbunden ist.

7. Lautsprecheranlage nach Anspruch 6, **dadurch gekennzeichnet,** daß der elektrische Anschluß des Lautsprechers (30) am Umfangsrand des Gehäuses (32) auf der Seite der Membran (34) angeordnet ist.
